# EUROPÄISCHE PATENTSCHRIFT

(11) **EP 0 429 761 B1**
(45) Veröffentlichungstag und Bekanntmachung des Hinweises auf die Patenterteilung: **27.04.1994**
(21) Anmeldenummer: 90115635.6
(22) Anmeldetag: 16.08.1990
(51) Int. Cl.: C09D 11/02, C08J 3/09

(54) **Flüssig, überwiegend naphthenisch-aromatische Kohlenwasserstoffmischung**
Liquid mixture containing essentially naphthenic-aromatic hydrocarbons
Mélange liquide constitué essentiellement d'hydrocarbures aromatiques de type naphténique

(30) Priorität: 21.11.1989 DE 3938620
(43) Veröffentlichungstag der Anmeldung: 05.06.1991
(73) Patentinhaber: FIRMA KLAUS DAHLEKE KG, D-22297 Hamburg (DE)
(72) Erfinder: Hansen, Nils, D-2000 Hamburg 60 (DE)
(74) Vertreter: Siewers, Gescha, Dr.

(56) Entgegenhaltungen:
- EP-A- 0 179 510
- DE-A- 2 146 577

## Beschreibung

Die Erfindung betrifft flüssige, überwiegend naphthenisch-aromatische Kohlenwasserstoffmischungen.

Bei der fraktionierten Destillation von Rohöl verbleibt nach dem Abdestillieren der Heizölfraktionen ein Rückstand, der im wesentlichen aus Asphalten, Bitumen und Wachsen sowie aus sogenannten Schwerölen besteht, die einen Siedebereich von über 350 °C aufweisen. Diese Schweröle können zu verschiedenen Produkten weiterverarbeitet werden, so unter anderem zu Spindel- und Schmierölen, Solvaten, Weichmachern, Bestandteile von hochsiedenden Lösungsmitteln usw. Bestimmte Fraktionen hat man seit Jahrzehnten in der Druckfarbenindustrie als Bestandteil für Druckfarben verwandt und diese Fraktionen werden auch bei der Gummi- und Kautschukverarbeitung eingesetzt, und zwar als Weichmacher. Diese sogenannten Extrakte, die von der Industrie in großen Mengen verwendet werden, sind immer noch außerordentlich preisgünstig, so daß bislang über einen Ersatz durch andere Stoffe kaum diskutiert wurde. Allerdings gab es bis vor relativ kurzer Zeit auch keine näheren Untersuchungen über die Zusammensetzung diese Destillationsprodukte bzw. Lösungsmittelextrakte; derartige Untersuchungen sind erst in jüngerer Zeit durchgeführt worden und haben das auch for die Fachwelt überraschende Ergebnis erbracht, daß die Extrakte zum Teil bis 40 oder 50 % polycyklische Aromaten enthalten (nach IP 346).

Unter polycyklischen Aromaten versteht man aromatische Verbindungen mit kondensierten Ringsystemen, von denen sich viele oder fast alle als Karzinogene oder zumindest Cokarzinogene erwiesen haben. Musterbeispiele sind Benzo [a] pyren und Methylcholanthren. Die karzinogenen Eigenschaften einzelner Verbindungen scheinen an die Anwesenheit sogenannter Bay-Regionen geknüpft zu sein; ausführlichere Untersuchungen liegen von Lowe et al in Accounts chem. Res. 17 (1984) 332 ff. vor. Außerdem ist bekannt, daß viele polycyklische Aromaten, im folgenden als PCA abgekürzt, auch mutagene Effekte auslösen und außerdem phototoxisch sein können. Wegen dieser Eigenschaften sind 5 PCA in den Abschnitt III A2 im Entwurf der zweiten Änderung der Gefahrstoffverordnung aufgenommen worden.

Es ist daher bereits versucht worden, die üblicherweise eingesetzten Extrakte durch andere Kohlenwasserstoffe zu ersetzen, aber alle diese Versuche sind zum Teil daran gescheitert, daß die Ersatzöle sowohl in der Druckfarbenindustrie als auch bei der Gummiindustrie technische Nachteile aufweisen, die zum Teil ihre Einsetzbarkeit sehr stark oder völlig reduzieren. So weiß man, daß Alternativöle mit im wesentlichen paraffinisch-naphthenischen Aufbau für die meisten Synthesekautschuke als Weichmacher weniger gut sind, da sie nur über eine geringe Verträglichkeit mit Kautschuk verfügen, so daß die Gefahr des Ausschwitzens des Weichmachers aus der Mischung während des Vulkanisationsprozesses besteht. In IR-, SBR-, BR-, NBR-, CR- und NR-Kautschuken sind daher derartige Mineralöle schlechter verträglich. Gleiches gilt auch for die Druckfarbenindustrie; auch hier ist bekannt, daß ein hoher Anteil an Paraffinen zu Unverträglichkeit mit den verwendeten Harzen/Rußen usw. führt.

Es besteht daher noch ein Bedürfnis nach flüssigen Kohlenwasserstoffmischungen als Alternative oder Ersatz für die bisher beispielweise bei der Gummiindustrie oder in der Druckfarbenherstellung verwendeten Sumpfdestillate und Extrakte.

Erfindungsgemäß werden nun flüssige, überwiegend aromatisch-naphthenische Kohlenwasserstoffmischungen vorgeschlagen, die gekennzeichnet sind durch einen Gehalt an 5 - 50 Gewichtsteile Inden-Cumaronharz und 50 - 95 Gewichtsteile eines Mineralölschnittes im Siedebereich zwischen etwa 200 °C - 600 °C und durch einen PCA-Gehalt von unter 0,01%.

Es ist bekannt, daß die Unverträglichkeit der überwiegend paraffinischen Mineralöle bei den bekannten Verwendungszwecken überwunden werden kann, wenn man eine Kohlenwasserstoffmischung überwiegend aromatisch-naphthenischen Charakters einsetzt, wobei allerdings der Aromatengehalt aufgrund des kanzerogenen Risikos möglichst frei von PCA sein sollte.Die bei der Verwendung als Weichmacher und bei der Druckfarbenherstellung geschätzten Eigenschaften können erreicht werden durch Verbindungen von Aromaten mit sehr geringen PCA-Anteil. Diese Aromaten sind gesundheitlich verhaltnismäßig unbedenklich, jedenfalls ist bei diesen Verbindungen keine karzinogene Aktivität bekannt.

Als Mineralöl wird erfindungsgemäß ein Destillationsschnitt eingesetzt im Siedebereich von etwa 200 °C bis 600 °C, der in der Regel einen Aromatengehalt von 0% - 30% (DIN 51378), eine Dichte bei 20 °C von etwa 0,8 g/cm³ bis 1,2 g/cm³ und einen Flammpunkt von über 60 °C aufweist. Der Aromatengehalt besteht nahezu ausschließlich aus nicht polycyklischen Aromaten, meist substituierten aromatischen Kohlenwasserstoffen oder aromatischen Heterocyklen.

Die zweite Komponente der erfindugsgemäßen Mischung besteht aus Inden-Cumaronharzen. Unter Inden-Cumaronharzen versteht man eine Gruppe thermoplastischer Harze, die durch Polymerisation bestimmter Fraktionen des bei der Destillation von Steinkohlenteer gewonnenen Leichtöls oder aus der Erdöldestillation erhalten werden. Diese sogenannten Losungsbenzole mit Siedebereichen von etwa 160 °C -185 °C enthalten bis zu 60% polymerisierbare Substanzen, vor allen Dingen Inden und Cumaron sowie deren Mono- und Dimethylderivate sowie geringe Mengen Dicyklopentadien. Aus diesen Gemischen hält man durch Einwirkung von Saure oder Lewissäuren dickflüssige bis feste Massen, die praktisch neutral reagieren, unverseifbar sind und sich in aromatischen Kohlenwasserstoffen lösen. Die Zusammensetzungen variieren in Abhängigkeit von den Ausgangsprodukten geringfügig; erfindungsgemäß werden Inden-Cumaronharz mit einer Dichte von etwa 0,9 g/cm³ - 1,3 g/cm³, einem Flammpunkt von über 60 °C und einem Aromatengehalt von bis 50% oder mehr eingesetzt.

Die erfindungsgemaßen eingesetzten Kohlenwasserstoffmischungen werden so eingestellt, daß der Gesamtgehalt an Naphthenen vorzugsweise im Bereich von etwa 30 - 40 Gewichtsprozent und der Aromatengehalt etwa 25 bis über 40 Gewichtsprozent beträgt. Der PCA-Gehalt liegt bei diesen Mischungen unter 0,01%, bestimmt nach der Methode von Prof. Grimmer, Hamburg-Ahrensburg, veröffentlicht in Fresenius, Analytische Chemie, 1983, Band 314, S. 29-36.

Die Herstellung der erfindungsgemäßen Mischungen erfolgt in einfacher Weise durch Mischen der Ölkomponente mit dem flüssigen Inden-Cumaronharz; leichtes Erwärmen beschleunigt diesen Vorgang.

Die erfindungsgemaßen Kohlenwasserstoffmischungen werden vorzugsweise bei der Druckfarbenherstellung und -verarbeitung oder als Weichmacher für Kautschuk, und zwar Natur- oder Synthesekautschuke, eingesetzt. Die Mischungen aus Mineralölschnitten und Inden-Cumaronharze können auch unter Kostengesichtspunkten mit den bisher verwendeten Extrakten konkurrieren. Im Gegensatz zu den bisher üblichen Produkten ist allerdings der Gehalt an PCA drastisch verringert und in einem Bereich, der nach der allgemeinen Auffassung in der Wissenschaft als gesundheitlich unbedenklich angesehen werden kann.

Die Erfindung wird im folgenden anhand der Beispiele näher erläutert:

### Beispiel 1

50 Teile eines Mineralölschnittes mit einer Dichte von 0,9 g/cm³ und einer Viskositat bei 20 °C von etwa 2 . 10⁴ mm²/sec. und einem Aromatengehalt von etwa 20% wurden mit 50 Teilen eines flüssigen Inden-Cumaronharzes mit einem Flammpunkt von über 60 °C und einer Dichte von etwa 1,1 g/cm³ und eine Viskosität von etwa 10⁴ mm²/sec. gemischt und leicht erwärmt. Die fertige Mischung ist ein hellbraunes klares Öl mit einem Aromatengehalt von 40%, einem Gehalt an Naphthenen von 40% und einem Gehalt an Paraffinen von 20%. Der PCA-Gehalt, bestimmt nach der Methode von Prof. Grimmer, liegt unter 0,004%. Die Viskosität bei 20 °C beträgt 10⁴ mm²/sec; Brechungsindex 1,5635/20 °C; VDK 0,963.

### Beispiel 2

50 Teile eines Mineralölschnittes mit einer Dichte von 0,9 g/cm³ und einer Viskosität von 8 · 10³mm²/sec bei 20 °C und einem Aromatengehalt von 20% wurden mit 50 Teilen eines flüssigen Inden-Cumaronharzes mit einem Flammpunkt von über 60 °C und einer Dichte von etwa 1,1 g/cm³ und einer Viskosität von etwa 10⁴ mm²/sec gemischt und leicht erwärmt. Die fertige Mischung ist ein hellbraunes klares Öl mit einem Aromatengehalt von 41%, einem Gehalt an Naphthenen von 36% und einem Gehalt an Paraffinen von 23% (Bestimmung nach DIN 51378). Der PCA-Gehalt, bestimmt nach der Methode von Prof. Dr. Grimmer, liegt unter 0,01%. Die Viskosität bei 20 °C betragt 4650 mm²/sec Brechungsindex 1,5632/20 °C; VDK 0,962.

### Beispiel 3

91 Teile eines Mineralölschnittes mit einer Dichte von 0,9 g/cm³ und einer Viskosität bei 20 °C von etwa 8000 mm²/sec und einem Aromatengehalt von 20% wurden mit 9 Teilen eines flüssigen Inden-Cumaronharzes mit einem Flammpunkt von über 60 °C und einer Dichte von 1,1 g/cm³ und einer Viskositat von etwa 10000 mm²/sec bei 20 °C gemischt und leicht erwarmt. Die fertige Mischung bildet ein hellbraunes klares Öl mit einem Aromatengehalt von 24%, einem Gehalt an Naphthenen 34% und einem Gehalt an Paraffinen von 42%. Der PCA-Gehalt, bestimmt nach der Methode von Prof. Dr. Grimmer, liegt unter 0,01%. Die Viskosität bei 50 °C beträgt 400 mm²/s; Brechungsindex 1,5289/20 °C; VDK 0,888. Gegebenenfalls können in die Mischung auch Verdickungsmittel wie zum Beispiel Polyisobutylen oder Polyethylen eingearbeitet werden, um eine gewünschte Viskositfät einzustellen.

## Patentansprüche

1. Flüssige, überwiegend aromatisch-naphthenische Kohlenwasserstoffmischung, gekennzeichnet durch einen Gehalt an 5-50 Gewichtsteilen Inden-Cumaronharzen und 50-95 Gewichtsteilen eines Mineralölschnittes im Siedebereich zwischen 200 °C - 600 °C und durch einen Gehalt an polycyclischen Aromaten (PCA) von unter 0,01 Gewichtsprozent.

2. Kohlenwasserstoffmischung nach Anspruch 1, dadurch gekennzeichnet, daß die Mineralölkomponente aus einem Schnitt mit einem Aromatengehalt von 0-30 Gewichtsprozent, einer Dichte bei 20°C von 0,8 g/cm³ - 1,2 g/cm³ und einem Flammpunkt von über 60°C besteht.

3. Kohlenwasserstoffmischung nach Anspruch 1 oder 2, dadurch gekennzeichnet, daß der aromatische Anteil überwiegend aus ein- oder zweikernigen, ggf. substituierten aromatischen Kohlenwasserstoffen oder Heterozyklen besteht.

4. Kohlenwasserstoffmischung nach Anspruch 1, dadurch gekennzeichnet, das die Inden-Cumaronharze eine Dichte von 0,9 g/cm³ - 1,3 g/cm³, einen Flammpunkt von über 60°C und ein Aromatengehalt von etwa 10% - 50% aufweisen.

5. Kohlenwasserstoffmischung nach Anspruch 4, dadurch gekennzeichnet, daß der aromatische Anteil überwiegend aus zweikernigen Aromaten besteht.

6. Kohlenwasserstoffmischung nach Anspruch 1 bis 5, dadurch gekennzeichnet, das der Gesamtanteil an Naphthenen etwa 30-40 Gewichtsprozent (DIN 51378) und der Anteil an Aromaten etwa 25 bis über 40 Gewichtsprozent (DIN 51378) betragen.

7. Verwendung der Kohlenwasserstoffmischung nach Anspruch 1 bis 6 als Weichmacher für natürliche oder synthetische Kautschuke.

8. Verwendung der Kohlenwasserstoffmischung nach Anspruch 1 bis 6 als Druckfarbenöl.

## Claims

1. Liquid essentially naphthenic-aromatic hydrocarbon mixture characterized in containing 5 - 50 parts by weight of indene-coumarone resins and 50-95 parts by weight of a mineral oil fraction with a boiling range between 200°C and 600°C and a content of polycyclic aromatic compounds (PCA) of less than 0.01 percent by weight.

2. Mixture of hydrocarbons according to claim 1 characterized in that the mineral oil compound consists of a fraction with a content of aromatic compounds of 0 - 30 percent by weight, a density at 20°C of 0.8 g/cm³ - 1.2 g/cm³ and a flash point of more than 60°C.

3. Mixture of hydrocarbons according to claim 1 or 2 characterized in that the aromatic compound consists essentially of mono- or diannular possibly substituted aromatic hydrocarbons or heterocycles.

4. Mixture of hydrocarbons according to claim 1 characterized in that the indene-coumarone resins show a density of 0.9 g/cm³ - 1.3 g/cm³, a flash point of more than 60°C and a content of aromatic compounds of about 10% - 50%.

5. Mixture of hydrocarbons according to claim 4 characterized in that the aromatic portion consists essentially of diannular aromatic compounds.

6. Mixture of hydrocarbons according to claims 1 to 5 characterized in that the entire portion of naphthenes amounts to about 30 - 40 percent in weight (DIN 51378) and the portion of aromatic compounds amounts to about 25 to more than 40 percent in weight (DIN 51378).

7. Usage of the mixture of hydrocarbons according to claims 1 to 6 as plasticiser for natural or synthetic rubbers.

8. Usage of the mixture of hydrocarbons according to claims 1 to 6 as printing oil.

## Revendications

1. Mélange liquide constitué essentiellement d'hydrocarbures aromatiques ou naphténique caractérisé par un titre de 5 - 50 parties en poids de résines d'indène-coumarone et de 50 - 95 parties en poids d'une coupe des huiles minérales avec un domaine d'ébullition entre 200°C et 600°C et par un titre d'hydrocarbures aromatiques polycycliques (PCA) de moins de 0.01 pour cent en poids.

2. Mélange d'hydrocarbures selon revendication 1 caractérisé en ce que la composante des huiles minérales se compose d'une coupe avec un titre d'hydrocarbures aromatiques de 0 - 30 pour cent en poids, une densité à 20°C de 0.8 g/cm³ - 1.2 g/cm³ et un point d'inflammation de plus de 60°C.

3. Mélange d'hydrocarbures selon revendication 1 ou 2 caractérisé en ce que la composante d'hydrocarbures aromatiques se compose essentiellement d'hydrocarbures ou des hétérocycles aromatiques à un ou deux noyaux, éventuellement substitués.

4. Mélange d'hydrocarbures selon revendication 1 caractérisé en ce que les résines d'indène-coumarone montrent une densité de 0.9 g/cm³ - 1.3 g/cm³, un point d'inflammation de plus de 60°C et un titre d'hydrocarbures aromatiques d'à peu près 10% - 50%.

5. Mélange d'hydrocarbures selon revendication 4 caractérisé en ce que la partie aromatique se compose essentiellement de composés aromatiques diannulaires.

6. Mélange d'hydrocarbures selon les revendications 1 à 5 caractérisé en ce que le titre entier de naphtènes est à peu près 30 - 40 pour cent en poids (DIN 51378) et le titre de composés aromatiques est à peu près 25 jusqu'à plus de 40 pour cent en poids (DIN 51378).

7. Utilisation de la mélange d'hydrocarbures selon les revendications 1 à 6 comme émollient pour des caoutchoucs naturels ou synthétiques.

8. Utilisation de la mélange d'hydrocarbures selon les revendications 1 à 6 comme huile d'imprimerie.
